# EUROPEAN PATENT SPECIFICATION

(11) **EP 1 310 744 B1**
(45) Date of publication and mention of the grant of the patent: **10.01.2007**
(21) Application number: 02396165.9
(22) Date of filing: 07.11.2002
(51) Int. Cl.: F24F 1/02

(54) **Cooling system for cooling indoor air**
Kühlungssytem für Raumluftkühlung
Système de refroidissement pour refroidir de l'air intérieur

(30) Priority: 09.11.2001 FI 20012177
(43) Date of publication of application: 14.05.2003
(73) Proprietor: Chiller Oy, 04300 Tuusula (FI)
(72) Inventor: Lahdenperä, Heikki, 00840 Helsinki (FI)
(74) Representative: Savolainen, Seppo Kalevi

(56) References cited:
- EP-A- 0 756 140
- US-A- 4 524 588
- US-A- 5 447 037
- US-A- 5 970 723
- US-A- 6 038 879

## Description

### BACKGROUND OF THE INVENTION

The invention relates to a cooling system for cooling indoor air, the system comprising a compressor cooler which uses outdoor air as cooling air, a fan vaporizer which circulates indoor air and is connected to the compressor cooler, and a fan for free cooling by means of outdoor air.

Cooling system of this kind (see, for example, US. PATENT US-4524588-A) is used particularly in premises where there are several heat-producing devices. Such premises are often small, too. Typical applications for these systems are GSM centres, for example.

The space required by the above-mentioned components as well as their positioning have caused problems in prior art systems. The prior art systems always comprise several component units placed apart from one another because compressor coolers and fan vaporizers may be supplied by different manufacturers, and thus these need to be connected to one another with suitable pipes. The devices are often placed on the floor, which wastes floor space, or in equipment racks, which are placed on the floor and would be needed for other devices. When an air cooling device is on the floor, its air intake is usually arranged through the wall at the location of the device. In that case the air inlet outside the building may be close to the ground surface and is thus prone to vandalism. Several separate devices also require several fresh air inlets. Furthermore, the cooling capacity of the prior art cooling systems is modest in relation to the space they require and the number of inlets needed in the wall of the space to be cooled.

### BRIEF DESCRIPTION OF THE INVENTION

The object of the invention is to improve the system described at the beginning so as to solve the above-mentioned problems. This is achieved by a system of the invention which is characterized in that the compressor cooler, fan vaporizer and fan for free cooling are arranged in the same casing as a single cooling unit.

The fan vaporizer used in this unit is preferably a cassette-type component, i.e. a 'cassette assembly'.

Never before has either a cassette assembly or a fan system enabling free cooling been arranged in the same casing with a compressor cooler. Thanks to this, the cooling unit of the invention formed as a single packet is small enough to be mounted in one inlet provided through the outer wall, e.g. above the doors of GSM antenna boxes, in which case it is difficult for vandals to damage it. Neither does it take up space in equipment racks.

By combining the fan vaporizer and the compressor cooler, the fan vaporizer can be provided with a large front surface, in which case a high mechanical cooling capacity is achieved with respect to the volume of the cooling unit. Air enters the fan vaporizer vertically and exits horizontally.

The cooling unit can process large amounts of air because, according to the invention, the fresh air of free cooling connected to the unit can be guided past the compressor cooler and fan vaporizer, and mechanical cooling can be used at the same time. In that case the device may be provided with stepless control between free cooling and mechanical cooling.

### LIST OF FIGURES

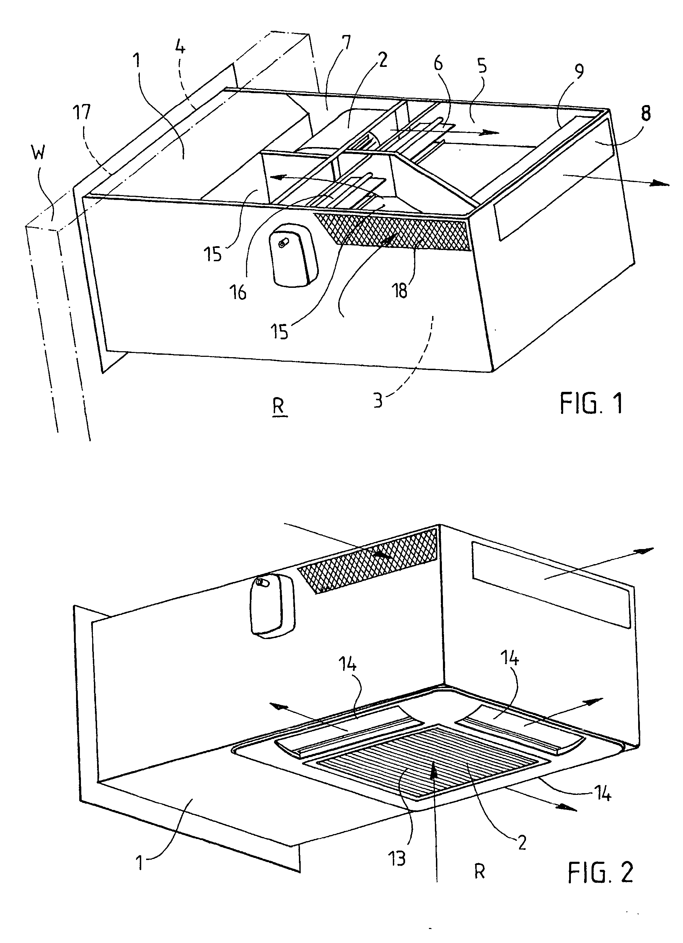

The invention will now be described by means of one preferred embodiment with reference to the accompanying drawings, in which
Figure 1 is a perspective view of a cooling unit according to the invention seen diagonally from the top;
Figure 2 is a perspective view of the cooling unit according to the invention seen diagonally from the bottom; and

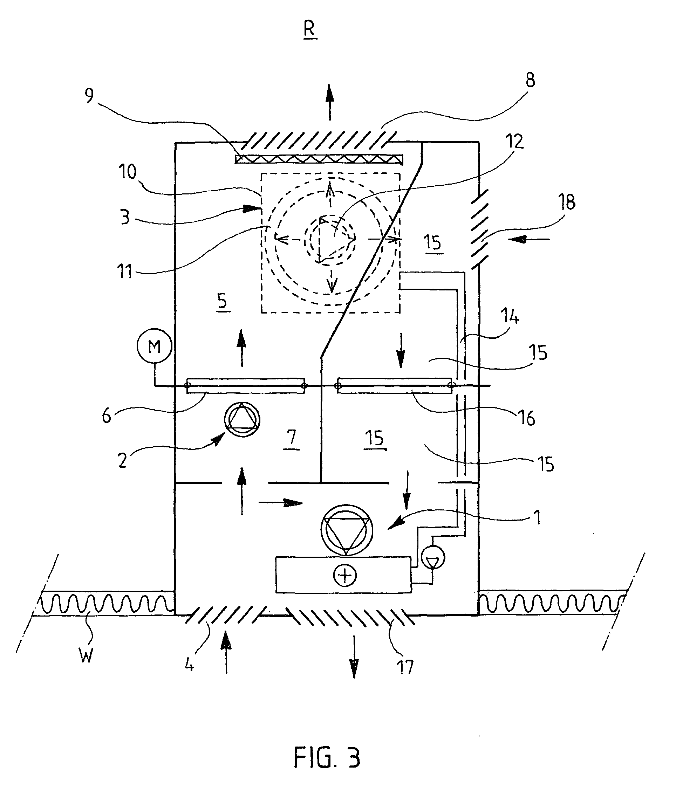

Figure 3 is a schematic top view of the cooling unit according to the invention.

### DETAILED DESCRIPTION OF THE INVENTION

As illustrated in the drawings, a cooling unit of the invention consists of a single assembly which is arranged in the same casing and mounted in an opening provided though an outer wall W. The unit comprises a compressor cooler 1 at the end that will be mounted through the outer wall W of the building, a fan for free cooling in the middle of the unit at its one edge and a cassette-type fan vaporizer 3 at the end of the unit which protrudes from the wall W.

At the outer wall W end of the cooling unit, there is a fresh air inlet 4 for the fan 2 for free cooling and the compressor cooler 1. On top of the fan vaporizer 3, there is fresh air flow channel 5 for the fresh air flow generated by the fan 2. The flow channel is connected to a fan space 7 functioning as a location for the fan 2 via a gate valve 6 and to the space R to be cooled via a grid 8 provided at the end of the cooling unit. There is a fresh air filter 9 mounted inside the grid 8.

The fan vaporizer 3 comprises a sound-proof steel cover 10, inside of which there is typically a round cooling (or heating) radiator 11. In the middle of the radiator there is a fan 12 which sucks air from the space R to be cooled through its inlet grid 12 provided on the same level with the lower surface of the cooling unit and a filter (not shown) arranged behind the inlet grid. After this, the fan 12 blows the air through the radiator 11, which cools it. Then the fan 12 blows the air back to the space R through flow openings 14 provided on the sides of the fan vaporizer 3 and simultaneously on the lower surface of the cooling unit.

The compressor cooler 1 is connected to the fan vaporizer 3 with pipes 14. Vaporizable cooling medium coolde by the compressor cooler 1 flows in the pipes 14 to enhance the function of the fan vaporizer 3. The compressor cooler 1 and the fan vaporizer 3 provide together mechanical cooling. The function of the compressor cooler 1 is not described in greater detail here because it is well known in the field (as well as the fan vaporizer described above). Briefly, using outdoor air as a cooler, the compressor cooler 1 enhances the function of the fan vaporizer 3 which circulates and cools indoor air.

For the air exiting the space to be cooled, there is an exhaust air flow channel 15 in the upper part of the cooling unit next to the flow channel 5 for fresh air, from which the exhaust air flow channel 15 is separated. The exhaust air flow channel 15 is connected to the space R to be cooled via one grid 18 in the upper part of one side of the cooling unit and to an exhaust air outlet 17 via a gate valve 16 provided in the middle of the channel 15.

The free cooling and mechanical cooling described above can be used and controlled independently of each other.

The cooling unit can be used as follows, for example:

When outdoor air is cold enough, like in winter, mechanical cooling can be turned off and the space R cooled only with free cooling, i.e. with fresh air blown by the fan 2. The cooling capacity is controlled by adjusting the rotation speed of the fan and the degree to which the gate valves 6 and 16 are open.

When the temperature difference between outdoor air and the space R to be cooled is smaller, like in spring, summer and autumn, and the temperature in the space R tends to rise, mechanical cooling (fan vaporizer 3 and, if necessary, compressor cooler 1) will be used in addition to free cooling. The cooling capacity is controlled by adjusting the degree to which the gate valves 6 and 16 are open, rotation speeds of the fans 2 and 12, and the compressor cooler 1. When it is hot, free cooling can be turned off altogether. Appropriate cooling is always achieved by adjusting the ratio of free cooling to mechanical cooling and the capacities of the cooling modes.

The invention was illustrated above by only one preferred embodiment. A person skilled in the art may, however, implement the inventive concept in various ways. The invention is thus not restricted to the example described above but its details may vary within the scope of the appended claims.

## Claims

1. A cooling apparatus for cooling inside air, the apparatus comprising a compressor cooler (1) which uses outdoor air as cooling air, a fan vaporizer (3) which circulates indoor air and is connected to the compressor cooler, and a fan (2) for free cooling by means of outdoor air, **characterized in that** the compressor cooler (1), fan vaporizer (3) and fan (2) for free cooling are arranged in the same casing as a single cooling unit.

2. A system according to claim 1, **characterized in that** the fan vaporizer (3) is a cassette type unit.

3. A system according to claim 1 or 2, **characterized in that** the fan (2) for free cooling can be controlled independently of the compressor cooler (1) and the fan vaporizer (3).

## Patentansprüche

1. Eine Kühlvorrichtung zum Kühlen der Innenluft, wobei die Vorrichtung einen Kühler mit Verdichter (1), der die Aussenluft als Kühlluft benutzt, einen Verdampfer (3) mit Ventilator, der die Innenluft in Umlauf versetzt und der an den Kühler mit Verdichter angeschlossen ist, und einen Ventilator (2) zur freien Abkühlung mit Hilfe der Aussenluft benutzt, **dadurch gekennzeichnet, dass** der Kühler (1) mit Verdichter, der Verdampfer mit Ventilator (3) und ein Ventilator (2) zur freien Kühlung in demselben Gehäuse als einzelne Kühleinheit angeordnet sind.

2. Ein System nach Patentanspruch 1, **dadurch gekennzeichnet, dass** der Verdampfer (3) mit Ventilator eine Kassettentypeinheit ist.

3. Ein System nach Patentanspruch 1 oder 2, **dadurch gekennzeichnet, dass** der Ventilator (2) zur freien Kühlung unabhängig vom Kühler mit Verdichter (1) und dem Verdampfer (3) mit Ventilator kontrolliert werden kann.

## Revendications

1. Un dispositif de refroidissement pour refroidir l'air intérieure, le dispositif comportant un refroidisseur à compresseur (1) utilisant l'air extérieure en tant qu'air de refroidissement, un vaporisateur à ventilateur (3) qui fait circuler l'air intérieure et qui est connecté au refroidisseur à compresseur, et un ventilateur (2) pour un refroidissement libre au moyen de l'air extérieure, **caractérisé en ce que** le refroidisseur à compresseur (1), le vaporisateur à ventilateur (3) et un ventilateur (2) pour un refroidissement libre sont disposés dans le même boîtier en tant que seule unité de refroidissement.

2. Un système selon la revendication 1, **caractérisé en ce que** le vaporisateur à ventilateur (3) est une unité à type cartouche.

3. Un système selon la revendication 1 ou 2, **caractérisé en ce que** le ventilateur (2) pour le refroidissement libre peut être contrôlé indépendamment du refroidisseur à compresseur (1) et du vaporisateur à ventilateur (3).
